# EUROPÄISCHE PATENTANMELDUNG

(11) **EP 1 354 632 A1**
(43) Veröffentlichungstag der Anmeldung: **22.10.2003**
(21) Anmeldenummer: 03400007.5
(22) Anmeldetag: 06.03.2003
(51) Int. Cl.: B03D 1/14, B01D 61/14, B01D 61/18, B01D 65/08

(54) **Verfahren und Vorrichtung zur membranunterstützten Flotation**

(30) Priorität: 27.03.2002 DE 10214457
(71) Anmelder: Gesellschaft für umweltkompatible Prozesstechnik mbH, 66123 Saarbrücken (DE)
(72) Erfinder: Matis, Kostas, Prof. Dr., 54006 Thessaloniki (GR); Blöcher, Christoph, 66111 Saarbrücken (DE); Chmiel, Horst, Prof. Dr., 66123 Saarbrücken (DE); Mavrov, Valko, Dr., 66121 Saarbrücken (DE); Lazaridis,K.Nikos,Dr., Box 116, 54124 Thessaloniki (GR)

(57) **Zusammenfassung**

Die Erfindung betrifft ein Verfahren und eine Vorrichtung zur Membran (5) unterstützten Flotation, wobei das Medium, das die flotierbaren Stoffe enthält, sich in einem Behälter (1) befindet, in dem im unteren Teil Gas (3) eingetragen wird. Dadurch wandern die flotierbaren Stoffe (8) in den oberen Teil des Behälters (1), wo sie eine Membraneinrichtung (5) passieren, über die sonstige im Medium gelöste niedermolekulare Komponenten gleichzeitig aus dem Behälter ausgetragen werden.

## Beschreibung

Die vorliegende Erfindung betrifft ein Verfahren und eine Vorrichtung zur membranunterstützten Flotation.

Die Flotation ist ein bekanntes Verfahren zur Entfernung (bzw. Gewinnung) grenzflächenaktiver, hydrophober oder suspendierter Stoffe aus einer Emulsion bzw. Suspension, z.B. einer wässrigen Lösung. Dabei werden bekanntlich feine Gasblasen (z.B. Luft) am Boden eines mit der wässrigen Lösung, Emulsion bzw. Suspension gefüllten Behälters eingebracht. Während die Gasblasen nach oben steigen, reichern sich die genannten Stoffe an der Grenzfläche an, so dass sie im obersten Teil des Behälters in hoher Konzentration ausgetragen werden können.

Mit dem beschriebenen Verfahren werden z.B. grenzflächenaktive Stoffe wie z.B. Proteine aus wässrigen Lösungen, Öle oder Fette aus Emulsionen, oder Zellen aus Bioreaktoren als Produkt gewonnen oder als Verunreinigung entfernt. Um diesen Prozess kontinuierlich, bzw. quasikontinuierlich zu fahren, muss ständig oder zyklisch das Medium (also z.B. die Lösung Emulsion oder Suspension) dem Behälter (bzw. im o.g. Beispiel dem Reaktor) zugeführt und die an Produkt oder Verunreinigung verarmte wässrige Phase aus dem Behälter entfernt werden. Leider ist-wie beschrieben - die zu entfernende Phase zwar verarmt, aber nicht frei von Produkt oder Verunreinigung.

Dieser prinzipielle Nachteil der Flotation hat dazu geführt, dass man sich um alternative Separationsverfahren bemüht hat. Ein solches Verfahren ist die Membranfiltration. Dabei wird die Lösung, Emulsion oder Suspension über eine Membran geleitet, deren Poren nur Wasser bzw. in Wasser gelöste niedermolekuläre Stoffe hindurchlassen, die übrigen Stoffe aber zurückhalten.

Das Membranverfahren hat jedoch die folgenden Nachteile:
- Die zurückgehaltenen Komponenten reichern sich in Membrannähe an (sog. Konzentrationspolarisation) und werden zum Teil auch an der Oberfläche der Membran adsorbiert. Dadurch vermindert sich der Fluss des Wassers durch die Membran (Permeatfluss) mit zunehmender Betriebsdauer.
- Es werden auch solche Komponenten zurückgehalten, die im Prinzip nicht zurückgehalten werden sollten, weil sie nicht flotierbar sind.

Daher ist es Aufgabe der vorliegenden Erfindung, ein Verfahren und eine Vorrichtung zu schaffen, mit denen die obigen Nachteile der Flotation bzw. der Membranfilterung überwunden werden können.

Erfindungsgemäß, d.h. gemäß dem Gegestand der Ansprüche 1 bzw. 4, wird die Flotation mit der Membranfiltration so kombiniert, dass die Vorteile beider Verfahren genutzt, deren Nachteile jedoch vermieden werden. In der Patentschrift GB 1 519 322 findet sich zwar die Kombination einer Flotationsvorrichtung mit einem Membranverfahren, diese sind jedoch als separate Einheiten ausgeführt, so dass kein Vorteil aus der Kombination der Verfahren gezogen wird.

In den Unteransprüchen finden sich bevorzugte Weiterbildungen des betreffenden Gegenstandes.

Im folgenden wird die Erfindung anhand von Ausführungsformen unter Bezugnahme auf die begleitenden Zeichnungen näher erläutert.

In den Figuren zeigen
Fig. 1 eine schematische Darstellung einer Vorrichtung zur membranunterstützten Flotation gemäss einer ersten Ausführungsform der vorliegenden Erfindung; und
Fig. 2 eine schematische Darstellung einer Vorrichtung zur membranunterstützten Flotation gemäss einer zweiten Ausführungsform der vorliegenden Erfindung.

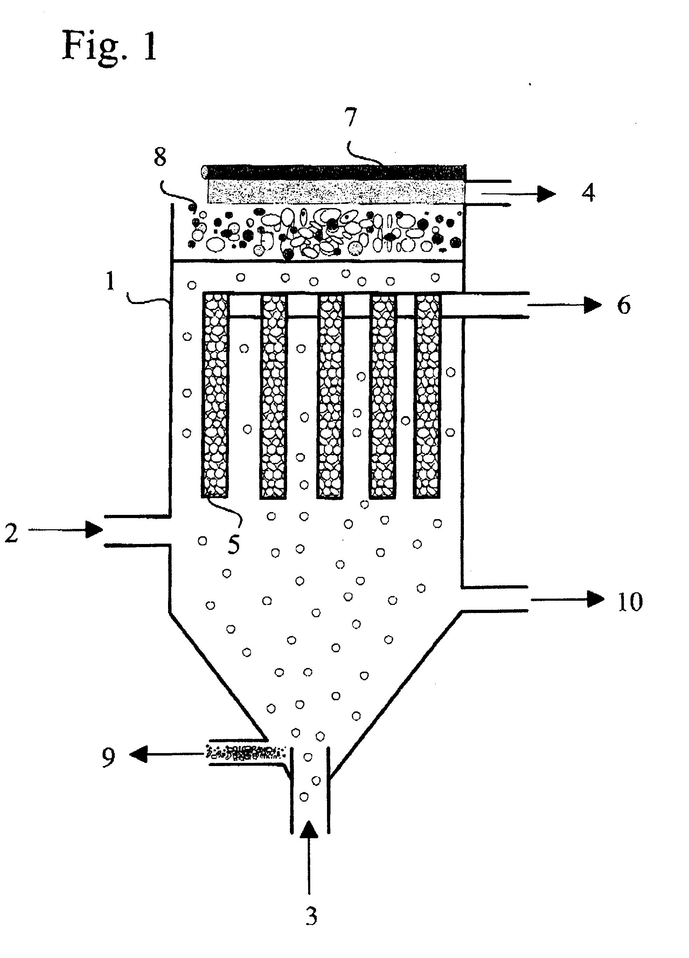

Fig. 1 zeigt eine Anordnung der erfindungsgemäßen Vorrichtung bzw. ein Fließschema des erfindungsgemäßen Verfahrens gemäss einer ersten Ausführungsform der vorliegenden Erfindung.

In einen Behälter bzw. Reaktor 1 strömt das mit der flotierbaren Komponente beladene Medium 2 kontinuierlich bzw. zyklisch durch eine Eingangsöffnung zu. Oberhalb der Eingangsöffnung liegt eine Membraneinrichtung 5 mit einer Mehrzahl von parallelen Membranen, welche in eine gemeinsame Ausgangsleitung münden, über die das Permeat 6 den Behälter 1 verlässt. Die Membranen reichen dabei bis dicht unter die Flüssigkeitsoberfläche.

Bei diesem Beispiel sind die Membranen parallele gleichlange und gleichbeabstandete Flachmembranen, doch ist die Erfindung nicht darauf beschränkt. In der deutschen Patentschrift DE 199 15 735 C 2 findet sich zwar die Integration von mikroporösen Membranlamellen in den Floatationsreaktor (Anspruch 21), diese dienen jedoch nicht dem Austrag des Mediums. Im US Patent GB 2 281 521 wird über im oberen Teil einer Flotationsvorrichtung eingesetzte Membranen Spülflüssigkeit eingetragen, auch hier findet kein Austrag von Medium über diese Membranen statt.

Im untersten Teil des Behälters 1 wird das für die Flotation benötigte Gas (z.B. Luft) feinblasig durch 3 in bekannter Weise zugeführt. Die flotierbaren Komponenten 8 lagern sich in der Grenzfläche der Gasblasen an, wandern mit diesen nach oben und sammeln sich an der Flüssigkeitsoberfläche. Sie können bei 4 aus dem Behälter 1 ausgetragen werden, z.B. durch ein bekanntes Skimming-Verfahren bzw. Abstreifverfahren mit einem entsprechenden mechanischen Abstreifer 7.

Während das über die Membran 5 abgezogene Permeat bei 6 den Behälter verlässt, werden sedimentierbare Komponenten durch eine weitere Ausgangsleitung 9 im untersten Teil des Behälters 1 ausgetragen.

Damit die Bilanz - zugeführte gleich abgeführte Stoffströme - eingehalten wird, und damit es nicht zur Anreicherung von insgesamt im Behälter zurückgehaltenen Komponenten kommt (solche Komponenten, die nicht flotieren, permeieren oder sedimentieren), zieht man eine geringe Menge "Bleed" 10 über eine Ausgangsöffnung ab, welche im unteren Teil des Behälters 1 unterhalb der Eingangsöffnung liegt.

Die einzelnen Membranen der Membraneinrichtung 5 können die verschiedensten Konfigurationen, wie z.B. Hohlfasern, Rohre oder Platten, aufweisen. Sie können horizontal, vertikal oder schräg angeordnet sein. Überraschend wurde aber beobachtet, dass das erwähnte Problem der Konzentrationspolarisation nahezu vollständig vermieden wird, wenn man die Membranen - wie in Fig. 1 gezeigt - in Strömungsrichtung der Blasen - also vertikal - ausrichtet.

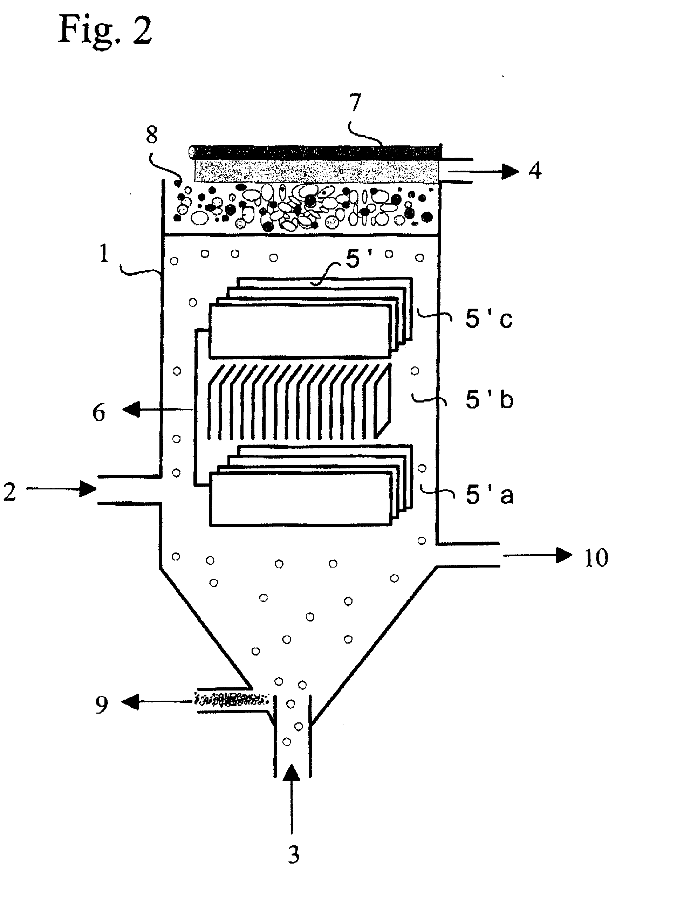

Fig. 2 zeigt eine schematische Darstellung einer Vorrichtung zur membranunterstützten Flotation gemäss einer zweiten Ausführungsform der vorliegenden Erfindung.

Die Membraneinrichtung 5' gemäss dieser zweiten Ausführungsform weist drei Gruppen 5a', 5b', 5c' von parallelen Flachmembranen auf, die vertikal in Strömungsrichtung orientiert sind und die jeweils um 90° gegeneinander verdreht sind. Das Permeat der Ausgangsleitungen der drei Gruppen wird in einer Leitung zusammengefasst und verlässt bei 6 den Behälter 1.

Eine derartige Anordnung von Gruppen von jeweils um 90° gedrehten Flachmembranen ist noch effektiver als eine, wie sie in Fig. 1 dargestellt ist. Ursache hierfür sind offensichtlich zwischen den einzelnen Membrangruppen entstehende Turbulenzballen.

## Patentansprüche

1. Verfahren zur Abtrennung flotierbarer Stoffe aus einem flüssigen Medium, insbesondere wässrigen Lösungen, Emulsionen oder Suspensionen, wobei in das in einem Behälter befindliche Medium im unteren Teil Gas eingetragen wird und dadurch die flotierbaren Stoffe in den oberen Teil des Behälters wandern, **dadurch gekennzeichnet, dass** sie dort eine Membraneinrichtung passieren, über die sonstige im Medium gelöste niedermolekulare Komponenten gleichzeitig aus dem Behälter ausgetragen werden.

2. Vorrichtung zur Abtrennung flotierbarer Stoffe aus einem flüssigen Medium, insbesondere wässrigen Lösungen, Emulsionen oder Suspensionen, mit:
- einem Behälter zum Aufbewahren des Mediums, in den im unteren Teil Gas eintragbar ist;
- mindestens einer Einlassöffnung und einer Auslassöffnung für das Medium im unteren Teil des Behälters; und
- einer Membraneinrichtung im oberen Teil des Behälters, durch die ein Permeat des Medium abführbar ist.

3. Vorrichtung nach Anspruch 2, **dadurch gekennzeichnet, dass** eine Skimming-Vorrichtung (7) zum Entfernen der flotierten Komponenten von der Oberfläche des Mediums vorgesehen ist.

4. Vorrichtung nach Anspruch 2 oder 3, **dadurch gekennzeichnet, dass** die Membraneinrichtung aus Membranen von zylindrischer Geometrie besteht.

5. Vorrichtung nach Anspruch 2 oder 3, **dadurch gekennzeichnet, dass** die Membraneinrichtung mindestens eine Gruppe von parallelen Flachmembranen aufweist, die in Richtung der Blasenbewegung angeordnet sind.

6. Vorrichtung nach Anspruch 5, **dadurch gekennzeichnet, dass** die Flachmembranen gleichlang und gleichbeabstandet sind und in einer gemeinsamen Ausgangsleitung an ihrer Oberseite zusammengefasst sind.

7. Vorrichtung nach Anspruch 2 oder 3, **dadurch gekennzeichnet, dass** die Membraneinrichtung mehrere Gruppen von parallelen Flachmembranen aufweist, die in Richtung der Blasenbewegung angeordnet sind und die einzelnen Gruppen jeweils in Strömungsrichtung um 90° gegeneinander versetzt sind.
